# EUROPEAN PATENT APPLICATION

(11) **EP 4 586 389 A1**
(43) Date of publication of application: **16.07.2025**
(21) Application number: 22968162.2
(22) Date of filing: 14.12.2022
(51) Int. Cl.: H01M 50/503, H01M 50/516, H01M 50/528, H01M 50/545, H01M 10/04, H01M 6/00, H01M 50/213

(54) **BATTERY CELL, BATTERY AND ELECTRICAL APPARATUS**

(71) Applicant: Contemporary Amperex Technology (Hong Kong) Limited, Central (HK)
(72) Inventor: CHAI, Zhisheng, NINGDE, Fujian 352100 (CN); YANG, Zhenfei, NINGDE, Fujian 352100 (CN); ZHU, Linlin, NINGDE, Fujian 352100 (CN); ZHU, Guanghao, NINGDE, Fujian 352100 (CN); JIN, Haizu, NINGDE, Fujian 352100 (CN)
(74) Representative: Laufhütte, Dieter
(86) International application number: PCT/CN2022/139091
(87) International publication number: WO 2024/124452

(57) **Abstract**

This application provides a battery cell, a battery, and an electric apparatus. The battery cell includes an electrode assembly, a housing, and a current collecting member. The electrode assembly includes a first tab; the housing is configured to accommodate the electrode assembly; and the current collecting member is accommodated in the housing, the current collecting member is electrically connected to the first tab, and the current collecting member is connected to the housing by welding.

## Description

### TECHNICAL FIELD

This application relates to the field of battery technologies, and in particular, to a battery cell, a battery, and an electric apparatus.

### BACKGROUND

Energy saving and emission reduction are crucial to the sustainable development of the automobile industry. Electric vehicles, with their advantages in energy conservation and emission reduction, have become an important part of sustainable development of the automobile industry. For electric vehicles, battery technology is an important factor in connection with their development.

In some scenarios, with a current collecting member electrically connected to an electrode assembly in a battery, electric energy is drawn and transmitted to an electric apparatus. However, the current collecting member is located inside a battery housing, and its connection structure and connection mode are facing many restrictions. Continuously optimizing the current collecting member and its connection structure in the battery to achieve efficient and reliable connection is of great significance to the quality and performance of the battery.

### SUMMARY

This application is intended to resolve at least one of the technical problems in the prior art. In view of this, an objective of this application is to propose a battery cell, a battery, and an electric apparatus, so as to improve the reliability of connection of a current collecting member.

An embodiment of a first aspect of this application provides a battery cell including an electrode assembly, a housing, and a current collecting member. The electrode assembly includes a first tab; the housing is configured to accommodate the electrode assembly; and the current collecting member is accommodated in the housing, the current collecting member is electrically connected to the first tab, and the current collecting member is connected to the housing by welding.

The current collecting member is electrically connected to the first tab and connected to the housing by welding, so that a stable conductive connection can be implemented and the reliability of the electrode connection can be improved.

In some embodiments, the current collecting member includes a first connecting portion and a second connecting portion. The first connecting portion is configured to be electrically connected to the first tab, and the second connecting portion is connected to the first connecting portion, where the second connecting portion is arranged along an edge of the first connecting portion and protrudes along a direction leaving the electrode assembly, and the second connecting portion is connected to the housing by welding to form a first fusion joint. The first connecting portion and the second connecting portion are welded to the first tab and the housing, respectively, so that a welding position between the current collecting member and the first tab and a welding position between the current collecting member and the housing can be effectively separated to avoid cross influence during welding. The second connecting portion extends along a plane different from that on which the first connecting portion is located and can be better positioned in contact with an inner side surface of the housing, which is conducive to improving welding quality.

In some embodiments, thickness of the second connecting portion in a direction perpendicular to a central axis of the electrode assembly is denoted as t1, and height of the second connecting portion in an axial direction of the electrode assembly is denoted as h0, satisfying: 2 ≤ h0/t1 ≤ 6. A reasonable selection of dimensions of the second connecting portion can better balance both the requirements for laser welding on the dimensions of the second connecting portion in the axial direction of the electrode assembly with the energy density of a battery cell.

In some embodiments, thickness of the second connecting portion in a direction perpendicular to the axial direction of the electrode assembly is denoted as t1, and 0.1 mm ≤ t1 ≤ 0.5 mm. A selection of an appropriate thickness of the second connecting portion can balance both the strength and current flow capacity of the current collecting member.

In some embodiments, an outer side surface of the second connecting portion is in interference fit with an inner side surface of the housing. With the second connecting portion arranged in interference fit with the housing, there is no gap between the outer side surface of the second connecting portion and the inner side surface of the housing after the current collecting member is mounted in the housing, so that the current collecting member and the housing can be tightly connected with high connection reliability, and the electrode assembly can be prevented from being damaged due to false welding, missed welding, and laser light leakage caused by an excessively large gap during welding, which is conducive to ensuring welding quality.

In some embodiments, the second connecting portion includes a plurality of protruding portions spaced apart along a circumferential direction of an inner wall of the housing and notches located between two adjacent protruding portions. The plurality of protruding portions are welded to the housing to form a plurality of first fusion joints. Such a design can make the protruding portions have a given deformability during mounting and better balance both the structural strength of the current collecting member and the feasibility of mounting and positioning the current collecting member.

In some embodiments, the plurality of protruding portions are evenly spaced apart around an axis of the electrode assembly. Such a structural design enables the first fusion joints formed between the current collecting member and the housing to maintain a symmetrical structure, which can enhance the impact resistance of the welding mark and prevent the welding mark from cracking due to uneven stress when being impacted by an external force.

In some embodiments, in the axial direction of the electrode assembly, height of the protruding portion of the second connecting portion is denoted as h0, and height of the notch in the axial direction of the electrode assembly is denoted as h1, where h1≤ h0. A reasonable selection of the height of the notch can balance both the overall strength and deformability of the second connecting portion, improving the assemblability of the current collecting member.

In some embodiments, a length of a projection of the first fusion joint along the axial direction of the electrode assembly 22 is a first length L1, and a perimeter of a projection of the inner side surface of the housing along the axial direction of the electrode assembly is a second length L2, where the first length L1 and the second length L2 satisfy L1 ≥ 0.5 × L2. The first length L1 and the second length L2 are set to satisfy the foregoing requirements, which can ensure an effective welding mark length, thereby achieving the reliability of connection by welding.

In some embodiments, the first connecting portion is connected to the first tab by welding to form a second fusion joint. The second fusion joint formed by welding can fixedly connect the current collecting member and the electrode assembly together, improving the overall strength of a battery.

In some embodiments, the first connecting portion includes a first side surface facing the electrode assembly and a second side surface away from the electrode assembly, and at least one of the first side surface and the second side surface is provided with a stiffener, the stiffener being configured to reinforce the first connecting portion. The deformation resistance of the current collecting member can be enhanced by providing the stiffener protruding from the plane on which the first connecting portion of the current collecting member is located.

In some embodiments, at least one stiffener located on the first side surface and the first tab are correspondingly provided and connected by welding to form the second fusion joint. The stiffener may abut against the first tab when the current collecting member is aligned with the electrode assembly, and welding the stiffener with the first tab can prevent the gap between the stiffener and the first tab from causing false welding and ensure the welding quality of the second fusion joint, while the second fusion joint formed by welding can further enhance the strength of the current collecting member.

In some embodiments, the stiffener used to form the second fusion joint is a punching groove protruding along a direction approaching the electrode assembly, and a side of the punching groove facing away from the electrode assembly is recessed in the second side surface. The process of forming the punching groove as the stiffener on the first connecting portion by punching is simple, has a controllable cost, and adds no weight to the current collecting member. The side recessed and facing away from the electrode assembly may further be used to indicate the welding position of the second fusion joint, which is conducive to simplifying positioning for welding.

In some embodiments, the punching grooves are provided in a quantity of greater than or equal to three. The provision of an appropriate quantity of second fusion joints can enable more stable structural connection and better current flow capacity.

In some embodiments, a plurality of punching grooves are evenly spaced apart along a circumferential direction of the center of the first connecting portion. The current of the electrode assembly can be uniformly transmitted to all parts of the current collecting member through the second fusion joints, further improving the uniformity of electric energy transmission and preventing an abnormal temperature rise caused by excessive current flowing in a local position of the current collecting member.

In some embodiments, the punching grooves are a plurality of radially extending spoke-shaped patterns or a plurality of crescent-shaped patterns. The regular patterns of the second fusion joints can guide the current to a position of the current collecting member close to its central region and can guide the current to an edge of the current collecting member close to the inner side surface of the housing, so that the current collecting member can uniformly conduct electric energy.

In some embodiments, a chamfer or fillet is formed at a joint between the second connecting portion and the first connecting portion. A chamfer or fillet transition can reduce the stress concentration at the joint and provide convenience for mounting the current collecting member into the housing.

In some embodiments, thickness of the first connecting portion in the axial direction of the electrode assembly is denoted as t2, and 0.1 mm ≤ t2 ≤ 0.5 mm. A selection of an appropriate thickness of the first connecting portion can enable the current collecting member to better balance the welding requirements, current flow capacity, and strength requirements.

In some embodiments, the housing includes an open end face with an opening, the battery cell further includes an end cover, the end cover includes an end cover body and a lap portion around an outer edge of the end cover body, and the lap portion is connected to the open end face to cover the opening. The provision of the end cover to seal the housing improves the sealing performance and safety performance of the battery cell, and is conducive to preventing the current collecting member from being directly impacted by an external force.

In some embodiments, in the axial direction of the electrode assembly, thickness C1 of the lap portion and thickness C2 of the end cover body satisfy C1 ≤ C2. A reasonable design of thicknesses of the end cover at different positions can balance both the energy density of the battery cell and the structural strength of the end cover.

In some embodiments, the thickness C1 of the lap portion satisfies 0.2 mm ≤ C1 ≤ 0.5 mm , and the thickness C2 of the end cover body satisfies 0.3 mm ≤ C2 ≤ 0.7 mm. The value range for the end cover in the embodiments can better balance both the energy density of the battery cell and the structural strength of the end cover.

In some embodiments, the housing includes a main body portion and a welded joint that are connected, where the main body portion surrounds an outer side of the electrode assembly, the welded joint is located at an end of the main body portion close to the opening, the open end face is located at an end of the welded joint away from the electrode assembly, and the second connecting portion is connected to the welded joint by welding to form a first fusion joint. The current collecting member and the welded joint close to the end of the opening of the housing are fusion welded to form the first fusion joint, which can reduce internal resistance to achieve a conductive connection while achieving a sealed connection.

In some embodiments, an end face of the second connecting portion away from the first connecting portion is lower than the open end face. The end face of the second connecting portion is lower than the open end face, which can provide a certain space for accommodating welding deformation during welding to form the first fusion joint, so as to avoid affecting the mounting of subsequent components due to the welding deformation.

In some embodiments, the end face of the second connecting portion away from the first connecting portion is flush with the open end face. This can maximize a butting length between the second connecting portion and the welded joint of the housing in the axial direction of the electrode assembly, so as to provide enough welding space between the second connecting portion and the welded joint to form the first fusion joint, which is conducive to improving the shaping quality of the welding mark of the first fusion joint.

In some embodiments, the first fusion joint is configured as a penetration weld seam formed by the laser light penetrating the second connecting portion and melting at least part of the welded joint. Welding in this way can prevent electrode damage caused by the laser light being directed toward the electrode assembly during welding, improving the safety of the welding operation.

In some embodiments, the first fusion joint is configured as a butt weld seam formed by the laser light being directed toward a butt joint between the second connecting portion and the welded joint. During butt welding, enough layout space is present for a laser outside the battery, which is conducive to improving the precision of laser welding and the welding quality. In addition, a length of contact between the second connecting portion and the welded joint in the axial direction of the electrode assembly can be reduced by butt welding, thereby avoiding occupying internal space within a battery housing.

In some embodiments, a groove is provided on a side of the lap portion facing the current collecting member, the groove being provided corresponding to the first fusion joint. The provision of the groove can form a space for accommodating the first fusion joint, so as to avoid that the end cover and the housing cannot meet assembly requirements due to the protrusion of the first fusion joints.

In some embodiments, an inner diameter of the main body portion is less than an inner diameter of the welded joint. The inner diameter of the welded joint is set to be larger than that of the main body portion, which can enlarge mounting space for the current collecting member and is conducive to the assembly and connection of the current collecting member and the housing.

In some embodiments, a step surface is formed at the joint between the main body portion and the welded joint, and the current collecting member abuts against the step surface. The inner diameter of the main body portion is different from that of the welded joint, so that a step surface is formed at the joint between an inner side surface of the main body portion and an inner side surface of the welded joint, and the current collecting member can be positioned through this step surface, allowing for more convenient contact positioning and improving the assembly efficiency.

In some embodiments, a wall thickness of the main body portion is equal to a wall thickness of the welded joint. This enables the formation of a step portion for better positioning of the current collecting member while maintaining the strength of the housing.

In some embodiments, an outer side surface of the main body portion is coplanar with that of the welded joint. The outer side surface of the main body portion being coplanar with that of the welded joint can maintain the consistency in dimensions of outer surfaces of battery cells and facilitate the combined assembly of a plurality of battery cells.

In some embodiments, in the direction perpendicular to the axial direction of the electrode assembly, the inner diameter D1 of the welded joint and the inner diameter D2 of the main body portion satisfy D1 - D2 ≥ 0.1 mm. The internal dimensions of the housing in this embodiment can allow the step surface formed to have a certain width for accommodating the current collecting member, thereby providing better positioning for mounting the current collecting member.

In some embodiments, the current collecting member includes a first material layer and a first welding flux layer, where the first material layer is made of a material different from that of the first welding flux layer, and the first welding flux layer is located on a side surface of the first material layer facing the housing. The provision of the welding flux layer on a surface for welding can assist in welding to improve welding quality and avoid cracks in the welding mark.

In some embodiments, the housing includes a second material layer and a second welding flux layer, where the second material layer is made of a material different from that of the second welding flux layer, and the second welding flux layer is located on a side surface of the second material layer facing the current collecting member. This can further improve the shaping quality of the welding mark and improve the stability and reliability of connection by welding.

In some embodiments, the first material layer is made of copper, and the second material layer is made of carbon steel. The selection of copper with high conductivity for the first material layer of the current collecting member can better achieve current collection and reduce the internal resistance of the battery. The selection of carbon steel for the second material layer of the housing can balance both structural strength and conductivity.

In some embodiments, the first welding flux layer and the second welding flux layer are both made of nickel. The use of nickel for the welding flux layer can help to improve the quality of the welding mark and avoid cracks.

In some embodiments, thickness of the first welding flux layer is denoted as u1, and thickness of the second welding flux layer is denoted as u2, where 1 µm ≤ ul + u2 ≤ 9 µm. An optimized thickness of the welding flux layer allows to control weights of the end cover and the housing while assisting in welding, avoiding unnecessary weight loss.

In some embodiments, the electrode assembly further includes a second tab with a polarity different from that of the first tab. The battery cell further includes an electrode terminal, the electrode terminal being located at an end of the housing away from the opening and electrically connected to the second tab.

An embodiment of a second aspect of this application provides a battery including the battery cell in the foregoing embodiment.

An embodiment of a third aspect of this application provides an electric apparatus, where the electric apparatus includes the battery in the foregoing embodiment, and the battery is configured to supply electric energy.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

In the accompanying drawings, unless otherwise specified, the same reference signs throughout a plurality of accompanying drawings indicate the same or similar components or elements. The accompanying drawings are not necessarily drawn to scale. It should be understood that these accompanying drawings merely describe some embodiments disclosed in this application, and should not be construed as a limitation on the scope of this application.
FIG. 1 is a schematic structural diagram of a vehicle according to some embodiments of this application;
FIG. 2 is a schematic structural exploded view of a battery according to some embodiments of this application;
FIG. 3 is a schematic structural diagram of a battery cell according to some embodiments of this application;
FIG. 4 is a front view of a battery cell according to some embodiments of this application;
FIG. 5 is a schematic cross-sectional view of the battery cell along direction A-A shown in FIG. 4;
FIG. 6 is a locally enlarged view of position B in FIG. 5;
FIG. 7 is a cross-sectional view of the battery cell along direction A-A shown in FIG. 4, with an end cover omitted;
FIG. 8 is a partially enlarged view of position C in FIG. 7;
FIG. 9 is a schematic structural diagram of a current collecting member according to some embodiments of this application;
FIG. 10 is a cross-sectional view of a current collecting member according to some embodiments of this application;
FIG. 11 is a schematic structural diagram of a connection between a current collecting member and a first tab according to some embodiments of this application;
FIG. 12 is a schematic structural diagram of a connection between a current collecting member and a first tab according to some other embodiments of this application;
FIG. 13 is a partially enlarged view of the position C in FIG. 7 according to another embodiment;
FIG. 14 is a partially enlarged view of the position C in FIG. 7 according to a still another embodiment; and
FIG. 15 is a partially enlarged view of the position B in FIG. 5 according to another embodiment.

### Description of reference signs:

vehicle 1000;
battery 100, controller 200, motor 300;
box 10, first portion 11, second portion 12; and
battery cell 20, housing 21, end wall 211, open end face 212, main body portion 213, welded joint 214, second material layer 215, second welding flux layer 216, electrode assembly 22, tab 221, first tab 221A, second tab 221B, current collecting member 23, stiffener 231, first connecting portion 232, second connecting portion 233, protruding portion 2331, notch 2332, first material layer 234, first welding flux layer 235, end cover 24, end cover body 241, abutting portion 242, lap portion 243, groove 2421, second fusion joint 25, first fusion joint 26, and electrode terminal 27.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, sequence or primary-secondary relationship of the technical features indicated. In the description of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal" "transverse", "length", "width", "thickness", "upper", "lower", "front", "rear", "left", "right", "perpendicular", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of the description of the embodiments of this application rather than indicating or implying that the apparatuses or components mentioned must have specific orientations, or must be constructed or manipulated according to specific orientations, and therefore shall not be construed as any limitations on embodiments of this application.

In the description of the embodiments of this application, unless otherwise specified and defined explicitly, the technical terms "mounting", "connection", "join", and "fastening" should be understood in their general senses. For example, they may refer to a fixed connection, a detachable connection, or an integrated connection, may refer to a mechanical connection or an electrical connection, and may refer to a direct connection, an indirect connection through an intermediate medium, an internal communication between two elements, or an interaction between two elements. Persons of ordinary skill in the art can understand specific meanings of these terms in this application as appropriate to specific situations.

Currently, from a perspective of the market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With continuous expansion of application fields of traction batteries, market demands for the traction batteries are also expanding.

An electrode assembly in a battery needs to be electrically connected to a housing, so that the housing can be used as an electrode lead-out pole that can be used to input or output electric energy. To enable the housing to be conveniently electrically connected to the electrode assembly in the battery cell, a current collecting member is further provided in the housing of the battery cell, the current collecting member being located on a side of the electrode assembly facing an end cover of the battery cell. The electrode assembly is electrically connected to the end cover via the current collecting member, and the end cover covers an opening of the housing and is electrically connected to the housing. In this way, the electrode assembly, the current collecting member, the end cover, and the housing are sequentially connected to form a conductive path.

The applicant has noted that the current collecting member, the end cover, and the battery housing are usually connected by welding. However, due to space constraints, high requirements are imposed on the positioning accuracy and dimensions of members during welding. If there is a large positioning deviation or dimensional mismatch, there may be a risk of burn-through, or the welding quality may be poor, resulting in an insufficient effective welding mark length and affecting the strength of the welding mark.

To achieve reliable connection of the current collecting member in the battery, the applicant has found through research that the connection structure between the current collecting member and the housing can be optimized in design to improve the positioning accuracy of the current collecting member and improve the welding quality between the current collecting member and the battery housing and between the end cover and the battery housing. Specifically, the dimensions of the current collecting member and the connection structure of the current collecting member, the end cover, the housing, and the tab can be optimized in design to improve the quality of the welding mark for connecting the current collecting member by welding and enhance the structural strength.

The battery cell disclosed in the embodiments of this application may be used without limitation in an electric apparatus such as a vehicle, a ship, or an aircraft. The battery cell, battery, and the like disclosed in this application may be used to constitute a power source system of the electric apparatus. This helps to alleviate and automatically adjust for deterioration of cell swelling force, supplement electrolyte consumption, improve the stability of battery performance, and extend battery life.

An embodiment of this application provides an electric apparatus that uses a battery as a power source. The electric apparatus may be but is not limited to a mobile phone, a tablet, a laptop computer, an electric toy, an electric tool, an electric bicycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of this application being a vehicle 1000 is used as an example for description of the following embodiments.

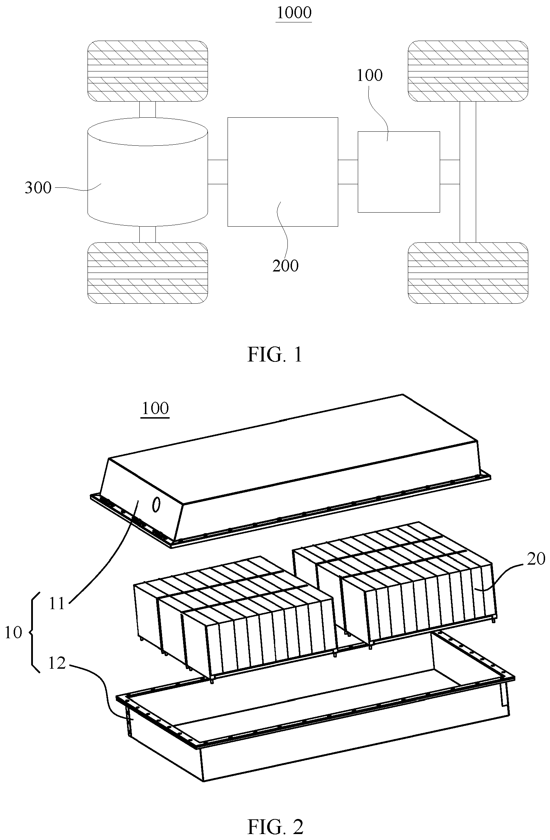

Referring to FIG. 1, FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, and the battery 100 may be positioned at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is an exploded view of a battery 100 according to some embodiments of this application. The battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first portion 11 and a second portion 12. The first portion 11 and the second portion 12 fit together so that the first portion 11 and the second portion 12 jointly define a space for accommodating the battery cell 20. The second portion 12 may be a hollow structure with one end open, and the first portion 11 may be a plate structure, where the first portion 11 covers the open side of the second portion 12 for the first portion 11 and the second portion 12 to jointly define an accommodating space. Alternatively, the first portion 11 and the second portion 12 may both be hollow structures with one side open, where the open side of the first portion 11 is engaged with the open side of the second portion 12. Certainly, the box 10 formed by the first portion 11 and the second portion 12 may have a variety of shapes, for example, cylinder or cuboid.

In the battery 100, a plurality of battery cells 20 may be provided, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10; or certainly, the battery 100 may be formed by a plurality of battery cells 20 connected in series, parallel, or series-parallel first to form a battery module and then a plurality of battery modules being connected in series, parallel, or series-parallel to form an entirety which is accommodated in the box 10. The battery 100 may further include other structures. For example, the battery 100 may further include a busbar configured to implement electrical connection between the plurality of battery cells 20.

Each battery cell 20 may be a secondary battery or a primary battery, and may be a lithium-sulfur battery, a sodium-ion battery, or a magnesium-ion battery, without being limited thereto. The battery cell 20 may be cylindrical, flat, cuboid, or of other shapes.

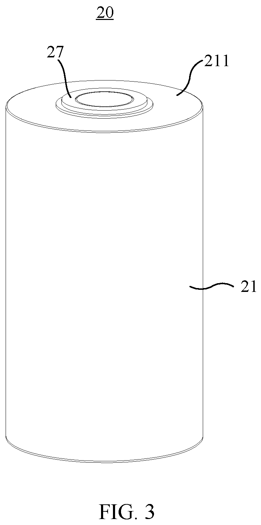

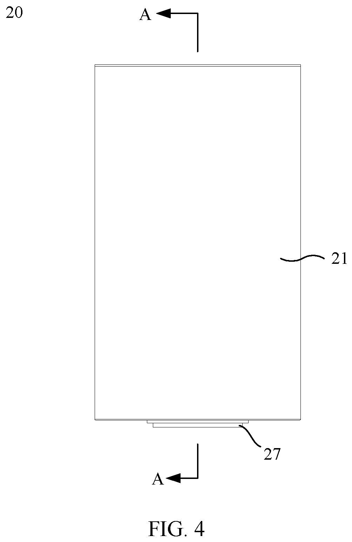

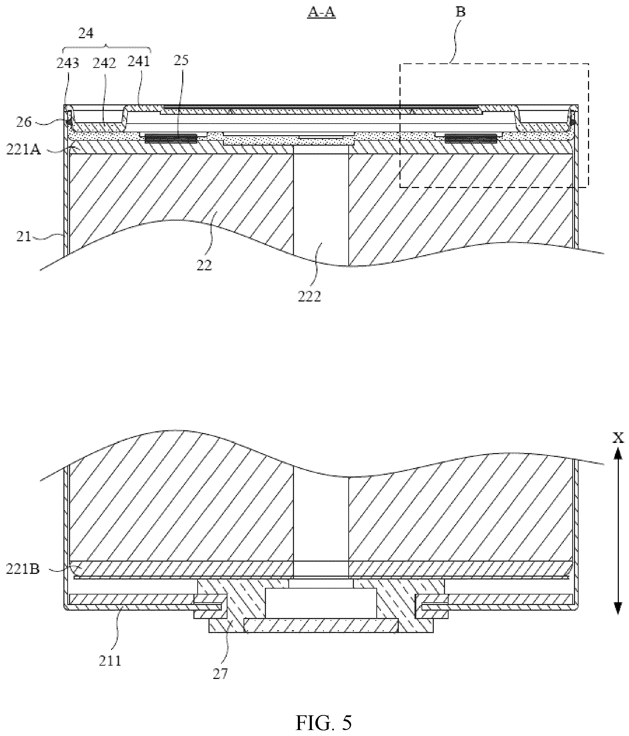

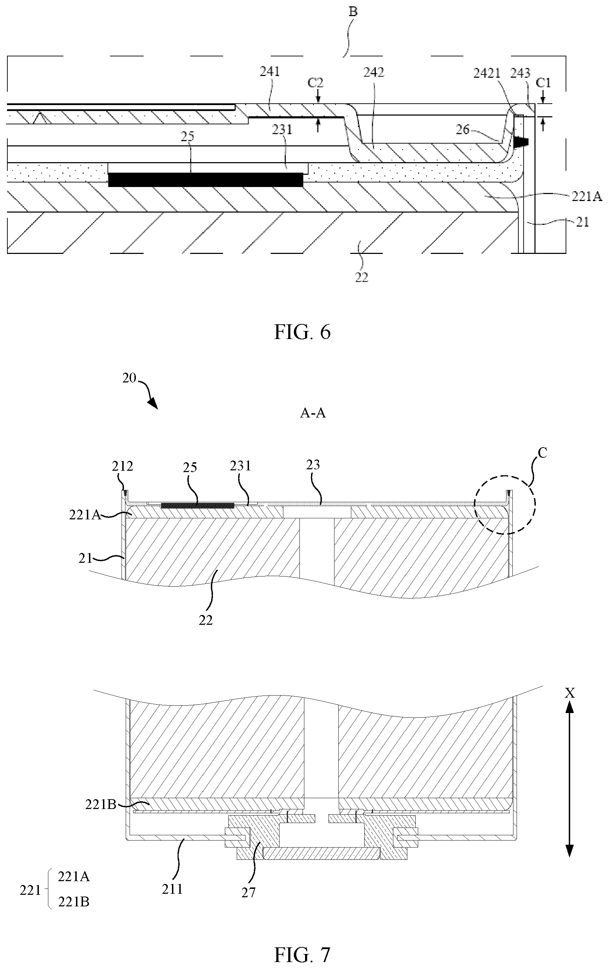

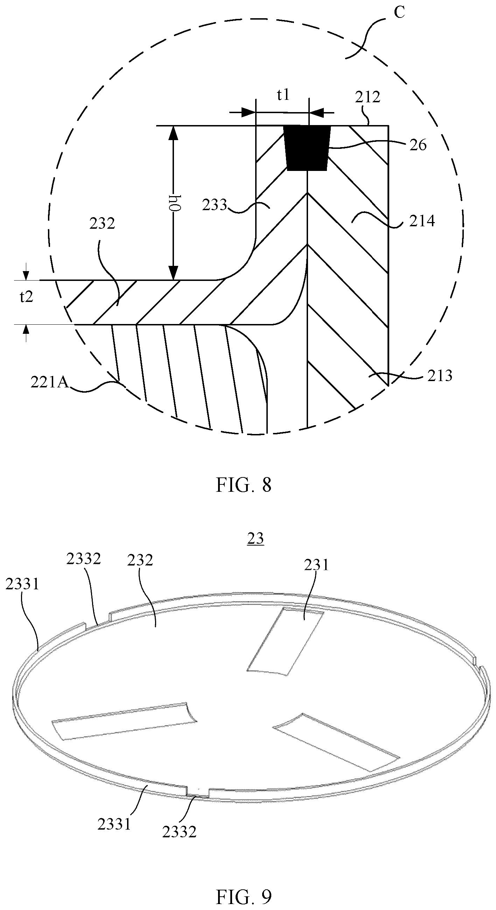

FIG. 3 is a schematic structural exploded view of a battery cell according to some embodiments of this application; FIG. 4 is a front view of the battery cell shown in FIG. 3; FIG. 5 is a schematic cross-sectional view of the battery cell along direction A-A shown in FIG. 4; FIG. 6 is a locally enlarged view of position B in FIG. 5; FIG. 7 is a cross-sectional view of the battery cell along direction A-A shown in FIG. 4, with an end cover omitted; and FIG. 8 is a locally enlarged view of position C in FIG. 7. According to some embodiments of this application, referring to FIG. 3 to FIG. 8, a battery cell 20 refers to a smallest unit that constitutes a battery 100. The battery cell 20 includes a housing 21, an electrode assembly 22, and a current collecting member 23. The electrode assembly 22 has a tab 221. The tab 221 includes a first tab 221A and a second tab 221B. The housing 21 defines an accommodating space and an opening at an end of the accommodating space. The accommodating space is configured for accommodating the electrode assembly 22. The current collecting member 23 is electrically connected to the first tab 221A and connected to the housing 21 by welding.

The housing 21 has a hollow structure, with an accommodating space formed inside for accommodating the electrode assembly 22. The housing 21 has an opening and an open end face surrounding the opening, and the housing 21 can be filled with an electrolyte. The shape and dimensions of the housing 21 are adapted to those of the electrode assembly 22. For a cylindrical battery cell 20, both the electrode assembly 22 and the housing 21 may be cylindrical, and for a prismatic battery cell 20, both the electrode assembly 22 and the housing 21 may be prismatic. The housing 21 may be made of various materials, such as copper, iron, aluminum, stainless steel, and aluminum alloy, which are not particularly limited in the embodiments of this application.

The electrode assembly 22 is a component of the battery cell 20 in which electrochemical reactions occur. The electrode assembly 22 may include a body portion and a tab 221. The tab 221 extends from the main body portion so that the tab 221 protrudes from an end portion of the main body portion. The electrode assembly 22 may include a positive electrode plate, a negative electrode plate, and a separator. The electrode assembly 22 may be a wound structure formed by the positive electrode plate, the negative electrode plate, and the separator through winding. The electrode assembly 22 may be a laminated structure formed by the positive electrode plate, the negative electrode plate, and the separator through lamination. The positive electrode plate includes a positive electrode current collector and positive electrode active substance layers applied on two opposite sides of the positive electrode current collector. The negative electrode plate includes a negative electrode current collector and negative electrode active substance layers applied on two opposite sides of the negative electrode current collector. The main body portion is a part of the electrode assembly 22 corresponding to a region of an electrode plate coated with an active substance layer, and the tab 221 is a part of the electrode plate not coated with the active substance layer.

The tab 221 may include a first tab 221A and a second tab 221B. The first tab 221A protrudes and is connected to a first electrode plate, and the second tab 221B protrudes and is connected to a second electrode plate. The first tab 221A and the second tab 221B are respectively connected to a different electrode lead-out pole for inputting or outputting electric energy. For example, the first tab 221A may be connected to the current collecting member 23 to implement an electrical connection between the current collecting member 23 and the housing 21, and the second tab 221B may be electrically connected to an electrode terminal 27, the electrode terminal 27 being insulated from the housing 21. In this way, the housing 21 and the electrode terminal 27 are respectively used as an electrode lead-out pole with different polarities on the battery cell 20 for inputting or outputting electric energy.

The first tab 221A and the second tab 221B may be located at a same end of the electrode assembly 22 or at different ends of the electrode assembly 22. One of the first tab 221A and the second tab 221B is a positive electrode tab, and the other is a negative electrode tab. If the first tab is a positive electrode tab and the second tab is a negative electrode tab, the housing 21 is a positive electrode lead-out pole and the electrode terminal 27 is a negative electrode lead-out pole. If the first tab is a negative electrode tab and the second tab is a positive electrode tab, the housing 21 is a negative electrode lead-out pole and the electrode terminal 27 is a positive electrode lead-out pole.

The current collecting member 23 may be made of a conductive material such as copper or iron. The current collecting member 23 is electrically connected to the first tab 221A and connected to the housing 21 by welding to collect and conduct the current from the first electrode plate to the housing 21.

According to the embodiments of this application, the current collecting member 23 is in conductive connection with the first tab 221A and the housing 21, respectively, so that the current generated by the first electrode plate in the electrode assembly 22 can be conducted to the housing 21, and the welding connection between the current collecting member 23 and the housing 21 can implement a stable conductive connection and improve the reliability of the electrode connection.

In some embodiments, as shown in FIG. 5 to FIG. 8, the current collecting member 23 includes a first connecting portion 232 and a second connecting portion 233 that are connected, where the first connecting portion 232 is electrically connected to the first tab 221A, the second connecting portion 233 is arranged along an edge of the first connecting portion 232 and protrudes along a direction leaving the electrode assembly 22, and the second connecting portion 233 is connected to the housing 21 by welding to form a first fusion joint 26.

The shape of the first connecting portion 232 is adapted to the shapes of the housing 21 and the electrode assembly 22. For the cylindrical housing 21, the electrode assembly 22 is circular, and the first connecting portion 232 is correspondingly circular. The first connecting portion 232 and the second connecting portion 233 can be made into one piece by an integral molding process, which eliminates the assembly process of the first connecting portion 232 and the second connecting portion 233 and improves the structural strength of the current collecting member 23 without increasing the cost. The second connecting portion 233 is arranged along the edge of the first connecting portion 232 and protrudes along the direction leaving the electrode assembly 22, so that the second connecting portion 233 is a structure in which the first connecting portion 232 extends in different directions respectively. For example, the second connecting portion 233 can be formed by bending a plate structure such that edges of the plate structure are bent. In one example, an included angle between the second connecting portion 233 and the first connecting portion 232 is 90°, and a side surface of the second connecting portion 233 formed in this way is parallel to an inner side surface of the housing 21, so that the two can better fit to be aligned when being connected by welding.

According to the embodiments of this application, the first connecting portion 232 and the second connecting portion 233 are connected to the first tab 221A and the housing 21 by welding, respectively, so that a welding position between the current collecting member 23 and the first tab 221A and a welding position between the current collecting member 23 and the housing 21 can be effectively separated to avoid cross influence during welding. The second connecting portion 233 extends along a plane different from that on which the first connecting portion 232 is located and can be better positioned in contact with the inner side surface of the housing 21, which is conducive to improving welding quality.

In some embodiments, as shown in FIG. 8, thickness of the second connecting portion 233 in a direction perpendicular to a central axis of the electrode assembly 22 is denoted as t1, and height of the second connecting portion 233 in an axial direction X of the electrode assembly 22 is denoted as h0, where t1 and h0satisfy 2 ≤ h0/t1 ≤ 6.

It can be understood that when h0/t1 < 2, there are several cases for h0/t1. One case is 1 ≤ h0/t1 < 2, in which h0 takes a small value, so that when laser light is projected between the second connecting portion 233 and the inner side surface of the housing 21 along the axial direction X of the electrode assembly 22 to form the first fusion joint 26 by welding, it is likely that the laser light is projected onto a side of the first connecting portion 232 facing away from the electrode assembly 22, causing partial melting of a joint between the second connecting portion 233 and the first connecting portion 232. Additionally, there is a narrow gap between an outer side surface of the joint with a chamfered structure and the inner side surface of the housing 21, and the laser light can reach the electrode assembly 22 through the narrow gap, resulting in the electrode assembly 22 being hit and damaged. In another case, h0/t1 < 1, which means h0 < t1, in which h0 takes a smaller value, and the risk of electrode assembly 22 being hit and damaged by the laser light is greater.

When h0/t1 > 6, which means h0 > 6t1, in which h0 takes an excessively large value, so that the second connecting portion 233 occupies too much space in the axial direction X of the electrode assembly 22 in the housing 21, and a small quantity of electrode plates can be accommodated in the battery cell 20, which in turn leads to a low energy density of the battery cell 20.

The inventors of this application have found through extensive experimental analysis that when the ratio h0/t1 of h0 to t1 is greater than or equal to 2 and less than or equal to 6, h0 takes an appropriate value. If the laser light is projected between the second connecting portion 233 and the inner side surface of the housing 21 along the axial direction X of the electrode assembly 22 to form the first fusion joint 26 by welding, the possibility of the joint between the second connecting portion 233 and the first connecting portion 232 being hit by the laser light and melted is reduced, which in turn is conducive to reducing the risk of damage to the electrode assembly 22 caused by the laser light passing through the narrow gap between the joint with a chamfered structure and the inner side surface of the housing 21. In addition, the space occupied by the second connecting portion 233 in the housing 21 in the axial direction X of the electrode assembly 22 is reduced as much as possible, so that more electrode plates can be accommodated in the battery cell 20 without changing a total height of the battery cell 20, which in turn is conducive to improving a percentage of the active substance of the battery cell 20, thereby improving the energy density of the battery cell 20.

In some embodiments, h0/t1 may be further designed as 3 ≤ h0/t1 ≤ 5. The inventors of this application have found through extensive experimental analysis that when a relationship between h0 and t1 satisfies 3 ≤ h0/t1 ≤ 5, h0 takes a more appropriate value, which can better balance both the requirements for laser welding on the dimensions of the second connecting portion 233 in the axial direction X of the electrode assembly 22 and the energy density of the battery cell 20.

In some embodiments, thickness of the second connecting portion 233 in the direction perpendicular to the axis of the electrode assembly 22 is denoted as t1, satisfying 0.1 mm ≤ t1 ≤ 0.5 mm.

In some embodiments, t1 may be further designed as 0.2 mm ≤ t1 ≤ 0.4 mm. By optimizing the relationship between the appropriate thickness and height of the second connecting portion,
A selection of an appropriate thickness of the second connecting portion 233 can balance both the strength and current flow capacity of the current collecting member 23.

In some embodiments, an outer side surface of the second connecting portion 233 is in interference fit with the inner surface of the housing 21.

The embodiments may be specifically applicable to schemes in which the housing 21 is cylindrical, the first connecting portion 232 is correspondingly circular, and the second connecting portion 233 is an annular structure.

With the second connecting portion 233 arranged in interference fit with the housing 21, there is no gap between the outer side surface of the second connecting portion 233 and the inner side surface of the housing 21 after the current collecting member 23 is mounted in the housing 21, so that the current collecting member 23 and the housing 21 can be tightly connected with high connection reliability, and the electrode assembly can be prevented from being damaged due to false welding, missed welding, and laser light leakage caused by an excessively large gap during welding, which is conducive to ensuring welding quality.

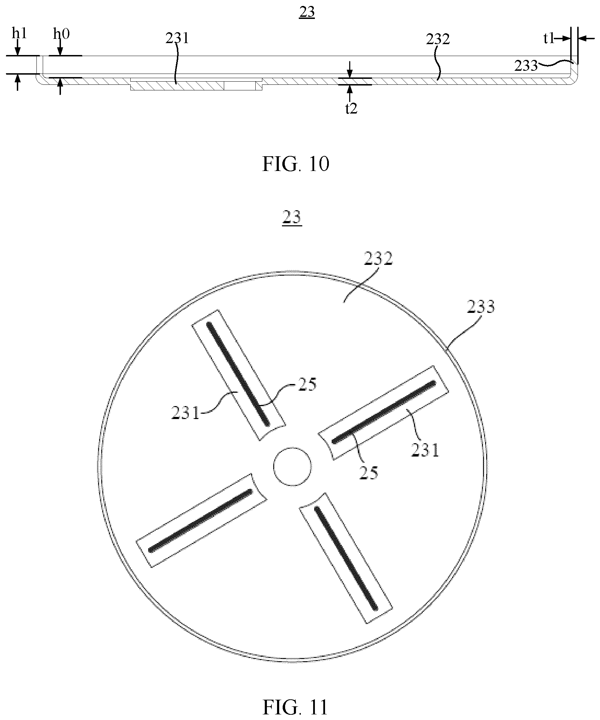

FIG. 9 is a schematic structural diagram of a current collecting member according to some embodiments of this application; and FIG. 10 is a cross-sectional view of a current collecting member according to some embodiments of this application. In some embodiments, as shown in FIG. 9, the second connecting portion 233 includes a plurality of protruding portions 2331 spaced apart and protruding along a direction leaving the electrode assembly 22 and notches 2332 located between two adjacent protruding portions 2331. The plurality of protruding portions 2331 are connected to the housing 21 by welding to form a part of the first fusion joints 26, respectively.

The quantity of protruding portions 2331 is not limited, for example, one or more protruding portions 2331 may be provided. When the protruding portions 2331 are provided in plurality, the second connecting portion 233 is divided into a plurality of arc-shaped connecting sections spaced apart, and the height of the notch 2332 is less than that of the protruding portion 2331, such that a notch is formed between two adjacent protruding portions 2331.

Such a design can make the protruding portions 2331 have a given deformability during mounting, especially when the second connecting portion 233 is in interference fit with the inner side surface of the housing 21, and better balance both the structural strength of the current collecting member 23 and the feasibility of mounting and positioning the current collecting member 23.

In some embodiments, the plurality of protruding portions 2331 are evenly spaced apart around the central axis of the electrode assembly 22.

It can be understood that the plurality of protruding portions 2331 are evenly spaced apart, such that the first fusion joints 26 formed by welding the protruding portions 2331 with the housing 21 are a plurality of arc-shaped welding marks with a same length that are also evenly spaced apart along the circumferential direction. Such a structural design enables the first fusion joints 26 formed between the current collecting member 23 and the housing 21 to maintain a symmetrical structure, which can enhance the impact resistance of the welding mark and prevent the welding mark from cracking due to uneven stress when being impacted by an external force.

In some embodiments, as shown in FIG. 10, in the axial direction X of the electrode assembly 22, height of the protruding portion 2331 of the second connecting portion 233 is denoted as h0, and height of the notch 2332 is denoted as h1, where h1≤ h0.

The height of the protruding portion 2331 refers to, in the axial direction X of the electrode assembly 22, a height of an end face of the protruding portion 2331 away from the first connecting portion 232 protruding relative to a side surface of the first connecting portion 232 on which the protruding portion 2331 is located. The height of the notch 2332 refers to a height of a vacant part, may be greater than 0 and less than or equal to the height of the protruding portion 2331. To be specific, the notch 2332 may alternatively refer to a structure protruding relative to a side surface of the first connecting portion 232 away from the electrode assembly, but the protruding height is less than that of the protruding portion 2331. In one example, the height of the notch 2332 is the same as that of the protruding portion 2331, and in this case, the surface of the notch 2332 is flush with the side surface of the first connecting portion 232 away from the electrode assembly.

The height of the notch 2332 is less than or equal to that of the protruding portion 2331, such that a structure between two adjacent protruding portions 2331 is open, which enhances the deformability of the protruding portion 2331 for fitting and alignment with the housing 21. A reasonable selection of the height of the notch 2332 can balance both the overall strength and deformability of the second connecting portion, improving the assemblability of the current collecting member.

In some embodiments, a length of a projection of the first fusion joint 26 along the axial direction X of the electrode assembly 22 is a first length L1, and a perimeter of a projection of the inner side surface of the housing 21 along the axial direction of the electrode assembly 22 is a second length L2, where the first length L1 and the second length L2 satisfy L1 ≥ 0.5 × L2.

The first length L1 is a length of the first fusion joint 26. When the first fusion joint 26 includes a plurality of weld seams spaced apart, the first length L1 is a cumulative length of a plurality of welding marks. It can be understood that since the first fusion joint 26 is formed by welding and melting along the inner side surface of the housing 21, when the first fusion joint 26 is provided in a full circle, the first length L1 and the second length L2 are equal. Considering that there may be missed welding or false welding during welding, an actual welding mark length may not reach a preset length, or the first fusion joint 26 with multi-section welding marks is formed in welding by sections, so that the first length L1 of the first fusion joint 26 is less than the second length L2. Because the welding mark length is directly related to the connection strength between the current collecting member and the housing, an excessively small first length will result in a less reliable connection between the current collecting member 23 and the housing 21 and weaker impact resistance.

The first length L1 and the second length L2 are set to L1 ≥ 0.5 × L2 which can ensure an effective welding mark length, thereby achieving the reliability of connection by welding.

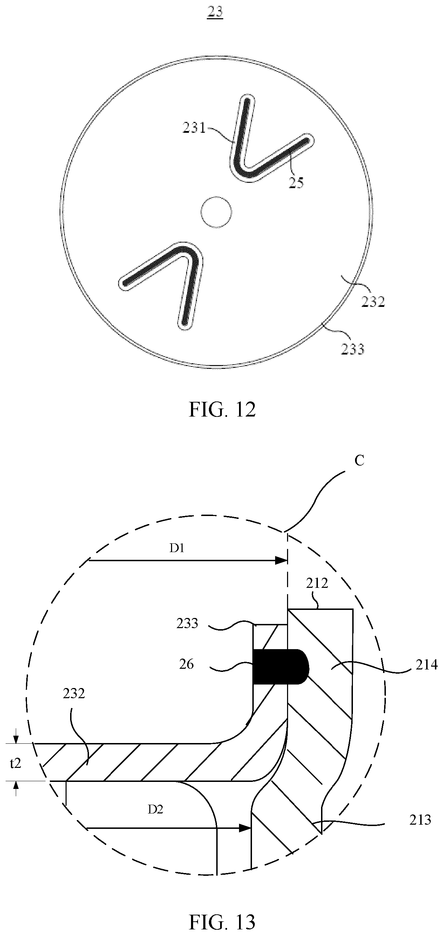

FIG. 11 is a schematic structural diagram of a connection between a current collecting member and a first tab according to some embodiments of this application; and FIG. 12 is a schematic structural diagram of a connection between a current collecting member and a first tab according to some other embodiments of this application. Referring to FIG. 11 and FIG. 12, in some embodiments, the first connecting portion 232 is welded to the first tab 221A to form a second fusion joint 25.

The conductive connection between the first connecting portion 232 and the first tab 221A is achieved by welding, so that the current from the electrode plate is collected to the current collecting member 23 and conducted to the housing 21. Laser welding or ultrasonic welding can be used for welding. In some examples, the second fusion joint 25 can be formed by emitting laser light along the axial direction of the electrode assembly to penetrate the first connecting portion 232 and melt the first tab 221A, and finally solidifying the melt.

The second fusion joint 25 formed by welding can fixedly connect the current collecting member 23 and the electrode assembly 22 together, improving the overall strength of the battery and achieving a stable conductive connection between the current collecting member 23 and the electrode assembly 22 even under the impact of external force.

In some embodiments, the first connecting portion 232 includes a first side surface facing the electrode assembly 22 and a second side surface away from the electrode assembly 22, and at least one of the first side surface and the second side surface is provided with at least one stiffener 231 protruding from the surface on which the stiffener is located, the stiffener 231 being configured to reinforce the current collecting member 23.

The current collecting member 23 is usually made of a material with high conductivity, such as copper. The material itself is not very strong and prone to deformation under external forces, which in turn affects the conductive connections between the current collecting member 23 and the first tab 221A and between the current collecting member 23 and the housing 21. The deformation resistance of the current collecting member 23 can be enhanced by providing the stiffener 231 protruding from the plane on which the first connecting portion of the current collecting member 23 is located. The stiffeners 231 may be arranged on a first side surface or a second side surface, or may be arranged on both side surfaces, and in addition, a quantity of the stiffeners 231 is not limited, for example, one or more stiffeners 231 may be provided.

In some embodiments, at least one stiffener 231 located on the first side surface of the first connecting portion 232 facing the electrode assembly 22 is connected to the first tab 221A by welding to form the second fusion joint 25.

Since the stiffener 231 protrudes from the surface on which the stiffener 231 is located, when located on the first side surface, the stiffener 231 can abut against the first tab 221A when the current collecting member 23 is aligned with the electrode assembly 22, and welding the stiffener 231 with the first tab 221A can prevent the gap between the stiffener 231 and the first tab 221A from causing false welding and ensure the welding quality of the second fusion joint 25, while the second fusion joint 25 formed by welding can further enhance the strength of the current collecting member 23.

In some embodiments, as shown in FIG. 9 and FIG. 10, the stiffener 231 used to form the second fusion joint 25 is a punching groove, and a side of the punching groove facing away from the electrode assembly 22 is recessed in the second side surface of the first connecting portion 232.

The punching groove is a part which is formed by punching a flat surface of the first connecting portion and integrally protrudes to one side surface of the first connecting portion. The process of forming the punching groove as the stiffener on the first connecting portion 232 by punching is simple, has a controllable cost, and adds no weight to the current collecting member. The side recessed and facing away from the electrode assembly 22 may further be used to indicate the welding position of the second fusion joint 25, which is conducive to simplifying positioning for welding.

In some embodiments, a quantity of the second fusion joints 25 is greater than or equal to three.

A greater quantity of second fusion joints 25 formed by welding provides higher structural strength, and a sufficient quantity of second fusion joints 25 can provide more current flow channels, so as to avoid overheating caused by excessive current flux through a single welding mark and improve the current flow capacity of the current collecting member.

In the embodiments, limiting an appropriate quantity of second fusion joints 25 can enable more stable structural connection and better current flow capacity.

In some embodiments, the second fusion joints 25 are evenly spaced apart along a circumferential direction of the center of the first connecting portion 232.

The second fusion joints 25 formed by welding may be provided in plurality, and a specific quantity can be arranged according to actual needs. The plurality of second fusion joints 25 may be evenly spaced apart around the center of the first connecting portion 232. For example, as shown in FIG. 11, four second fusion joints 25 are formed between the current collecting member 23 and the first tab 221A, and the four second fusion joints 25 are evenly distributed around the central axis of the electrode assembly 22.

In the embodiments, the electric energy of the electrode assembly 22 can be uniformly transmitted to all parts of the current collecting member 23 through the second fusion joint, further improving the uniformity of electric energy transmission and preventing an abnormal temperature rise caused by excessive current flowing in a local position of the current collecting member 23.

In some embodiments, the second fusion joints 25 are a plurality of radially extending spoke-shaped patterns or a plurality of crescent-shaped patterns.

In some examples, referring to FIG. 11, a plurality of strip-shaped second fusion joints 25 can be regarded as radiating outward from the central position of the current collecting member 23. In this way, the second fusion joints 25 can guide the current to a position of the current collecting member 23 close to its central region and can guide the current to an edge of the current collecting member 23 close to the inner side surface of the housing 21, so that the current collecting member 23 can uniformly conduct electric energy.

In some examples, referring to FIG. 12, the second fusion joint 25 integrally has a crescent-shaped pattern, and may specifically include a first segment, an arc segment, and a second segment which are connected in sequence. The first segment and the second segment are located on a side on which a center of the arc segment is located, and a distance between the first segment and the second segment gradually increases from one side close to the arc segment to the other side away from the arc segment. The center of the arc segment is located on a side of the arc segment away from the central axis of the electrode assembly 22.

In this way, the second fusion joints 25 can guide the current to the central position of the current collecting member 23 and can guide the current to an edge of the current collecting member 23 close to the inner side surface of the housing 21, so that the current collecting member 23 can uniformly conduct electric energy. Moreover, with the arc segment designed to connect the first segment and the second segment, the arc segment provides a smooth transition, which can avoid stress concentration as compared with a pointed end as a joint between the first segment and the second segment.

In some embodiments, a chamfer or fillet is formed at a joint between the second connecting portion 233 and the first connecting portion 232.

A chamfer or fillet transition can reduce the stress concentration at the joint and provide convenience for mounting the current collecting member 23 into the housing 21.

In some embodiments, as shown in FIG. 8, thickness of the first connecting portion 232 in the axial direction of the electrode assembly 22 is denoted as t2, and 0.1 mm ≤ t2 ≤ 0.5 mm.

In one example, the thickness t2 of the first connecting portion 232 may further satisfy 0.2 mm ≤ t2 ≤ 0.4 mm. In another example, the thickness t2 of the first connecting portion 232 and the thickness t1 of the second connecting portion 233 may be equal, so that the current collecting member 23 can be processed and molded from a single component, reducing manufacturing costs.

A selection of an appropriate thickness of the first connecting portion 232 can enable the current collecting member 23 to better balance the welding requirements, current flow capacity, and strength requirements.

In some embodiments, as shown in FIG. 5 to FIG. 8, the housing 21 includes an open end face 212 with an opening, and the battery cell 20 further includes an end cover 24. The end cover 24 includes an end cover body 241 and a lap portion 243 around an outer edge of the end cover body 241, and the lap portion 243 is connected to the open end face 212 so that the end cover 24 covers the opening.

The end cover 24 covers the opening to isolate a cavity in the housing 21 from an external environment. A shape of the end cover 24 is not limited and may be adapted to the shape of the housing 21 to fit the housing 21. The end cover 24 may be made of a material with a specified hardness and strength (for example, copper, iron, aluminum, stainless steel, and aluminum alloy), so that the end cover 24 is less likely to deform when subjected to pressure and collision, allowing the battery cell 20 to have higher structural strength and enhanced safety performance. In one example, the electrode terminal 27 may be located on a side of the housing 21 with the opening, for example, mounted on the end cover 24 in an insulating manner. In this case, both the first tab 221A and the second tab 221B are located on an end of the electrode assembly 22 facing the opening, so that one of the first tab 221A and the second tab 221B is electrically connected to the housing 21 through the current collecting member 23, and the other is electrically connected to the electrode terminal 27. In this way, the first tab 221A and the second tab 221B are led out from a same end of the electrode assembly 22, and it is only necessary to reserve space for electrical connection on one end of the electrode assembly 22 without need to provide electrode lead-out portions respectively on both ends of the battery cell 20, so that the overall energy density of the battery cell 20 can be effectively improved. As an alternative embodiment, as shown in FIG. 5, the electrode terminal 27 may alternatively be mounted on an end wall 211 of the housing 21 facing the opening, and in this case, the first tab 221A and the second tab 221B are located at different ends of the electrode assembly 22.

The provision of the end cover 24 to seal the housing 21 improves the sealing performance and safety performance of the battery cell 20, and is conducive to preventing the current collecting member 23 from being directly impacted by an external force.

In some embodiments, as shown in FIG. 6, in the axial direction X of the electrode assembly 22, thickness C1 of the lap portion 243 and thickness C2 of the end cover body 241 satisfy C1 ≤ C2.

A side of the end cover body 241 facing away from the electrode assembly 22 may be arranged flush with a side of the lap portion 243 facing away from the electrode assembly 22, so that the height of the battery cell 20 in the axial direction of the electrode assembly 22 is equal to a sum of a height of the housing 21 in the axial direction of the electrode assembly 22 and the thickness C1 of the lap portion 243, which can increase the effective capacity in the battery housing as much as possible. On this basis, because C1 < C2, the thickness C2 of the end cover body 241 in the embodiments may be larger, so that the structural strength of the end cover 24 can be improved, and the thickness of the lap portion 243 is smaller, which can reduce the space occupied by the housing at the end portion in the battery housing as much as possible.

It can be understood that when the end cover body 241 is provided with an indentation groove for pressure relief, thickness of a position at which the indentation groove is located may be reduced to adapt to a pressure threshold of pressure relief due to the need of pressure relief, and therefore, the thickness of the position does not really reflect the strength of the end cover body. In the embodiments, the thickness C2 of the end cover body 241 refers to a thickness of a region without the indentation groove.

In one example, the end cover body 241 may further include an abutting portion 242. The abutting portion 242 protrudes to a side on which the electrode assembly 22 is located relative to the end cover body 241, so that the abutting portion 242 can abut against a side surface of the current collecting member 23 away from the electrode assembly 22 when the end cover body 241 is closed. The abutting portion 242 abuts against the current collecting member 23, which can provide structural support for the current collecting member 23 to enhance the deformation resistance of the current collecting member 23; and in addition, the abutting portion 242 abuts against the current collecting member 23, which enables conductive communication between the two, allowing the current collected into the current collecting member 23 to be conducted to the end cover 24, so that the end cover 24 and the housing 21 are used together as a lead-out electrode of the first electrode plate.

In the embodiments, a reasonable design of thicknesses of the end cover 24 at different positions can balance both the energy density of the battery cell 20 and the structural strength of the end cover 24.

In some embodiments, the thickness C1 of the lap portion 243 may be designed as 0.2 mm ≤ C1 ≤ 0.5 mm, and the thickness C2 of the end cover body 241 may be designed as 0.3 mm ≤ C2 ≤ 0.7 mm.

The inventors of this application have found through extensive experimental analysis that with C1 in a value range of 0.2 mm to 0.5 mm and C2 in a value range of 0.3 mm to 0.7 mm, both the energy density of the battery cell 20 and the structural strength of the end cover 24 can be better ensured. In some embodiments of this application, the thickness C1 of the lap portion 243 and the thickness C2 of the end cover body 241 may further be designed as 0.3 mm ≤ C1 ≤ 0.4 mm , and 0.4 mm ≤ C2 ≤ 0.6 mm.

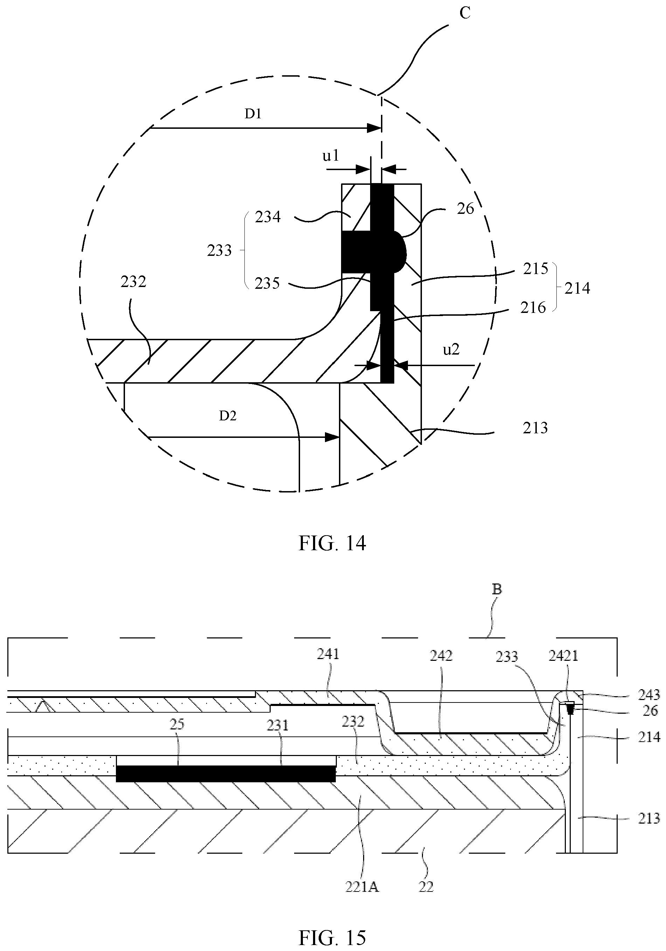

FIG. 13 is a partially enlarged view of the position C in FIG. 7 according to another embodiment; and FIG. 14 is a partially enlarged view of the position C in FIG. 7 according to a still another embodiment. In some embodiments, as shown in FIG. 13 and FIG. 14, the housing 21 includes a main body portion 213 and a welded joint 214. The main body portion 213 surrounds an outer side of the electrode assembly 22, and the welded joint 214 is located at an end of the main body portion 213 close to the opening, and the current collecting member 23 is connected to the welded joint 214 by welding to form the first fusion joint 26. The open end face 212 is located at an end of the welded joint 214 away from the electrode assembly 22, and the second connecting portion 233 is connected to the welded joint 214 by welding to form the first fusion joint 26.

In this example, the main body portion 213 and the welded joint 214 are sequentially arranged along the axial direction of the electrode assembly 22, and one end of the welded joint 214 away from the main body portion 213 encloses to form an opening of the housing 21. For a cylindrical housing 21, both the main body portion 213 and the welded joint 214 are annular. An end of the welded joint 214 away from the electrode assembly 22 is the open end face 212 that defines the opening of the housing 21.

The current collecting member 23 and the welded joint 214 close to an end of the opening of the housing 21 are fusion welded to form the first fusion joint 26, which can reduce internal resistance to achieve a conductive connection while achieving a sealed connection.

In some embodiments, as shown in FIG. 13, an end face of the second connecting portion 233 away from the first connecting portion 232 is lower than the open end face 212.

When the second connecting portion 233 is heated and melted during welding, a certain degree of welding deformation occurs. The end face of the second connecting portion 233 is lower than the open end face 212, which can provide a certain space for accommodating welding deformation during welding to form the first fusion joint 26, so as to avoid affecting the mounting of subsequent components due to the welding deformation, such as mounting alignment between the end cover 24 and the open end face.

In some embodiments, as shown in FIG. 14, the end face of the second connecting portion 233 away from the first connecting portion 232 is flush with the open end face 212.

The end face of the second connecting portion 233 being flush with the end face of the welded joint 214 means that the end faces of the second connecting portion 233 and the welded joint 214 are in a same plane. This can maximize a butting length between the second connecting portion 233 and the welded joint 214 of the housing 21 in the axial direction X of the electrode assembly 22, so as to provide enough welding space between the second connecting portion 233 and the welded joint 214 to form the first fusion joint 26, which is conducive to improving the shaping quality of the welding mark of the first fusion joint 26. It can be understood that, without affecting the welding, the situation that the end faces of the second connecting portion 233 and the welded joint 214 cannot be completely coplanar due to manufacturing accuracy or contact positioning should also be considered within the range that the end faces of the second connecting portion 233 and the welded joint 214 are flush in the embodiments.

In some embodiments, as shown in FIG. 6, FIG. 13, and FIG. 14, the first fusion joint 26 is configured as a penetration weld seam formed by the laser light penetrating the second connecting portion 233 and melting at least part of the welded joint 214.

The laser light penetrates the second connecting portion 233 in a direction intersecting with the axis of the electrode assembly 22 and at least partially melts the welded joint 214, which means that the second connecting portion 233 and the welded joint 214 form the first fusion joint 26 through an inner welding method from the inside of the battery to the outside, and in this case, the first fusion joint 26 is located on a side wall of the second connecting portion 233. For example, the laser light may be emitted to the second connecting portion 233 along a direction perpendicular to the axial direction X of the electrode assembly 22, and then projected to the housing 21 after the laser light penetrates the second connecting portion 233, so that the second connecting portion 233 is connected to the housing 21 by welding to form the first fusion joint 26.

When the inner welding method is used for welding, the laser light is directed toward the outside of the battery, which can avoid electrode damage caused by the laser light being directed toward the electrode assembly during welding and improve the safety of welding operation.

In some embodiments, as shown in FIG. 8, the first fusion joint 26 is configured as a butt weld seam formed by the laser light being directed toward a butt joint between the second connecting portion 233 and the welded joint 214.

The first fusion joint 26 may be a butt weld seam, which means that the laser light is directed toward an alignment position between the second connecting portion 233 and the welded joint 214 and partially melts the second connecting portion 233 and the welded joint 214 to form a weld seam. In one example, the second connecting portion 233 is flush with the open end face 212 of the welded joint 214, so that the second connecting portion 233 and the welded joint 214 can form the first fusion joint 26 by butt welding at the butt joint therebetween.

During butt welding, enough layout space is present for a laser outside the battery, which is conducive to improving the precision of laser welding and the welding quality. In addition, the first fusion joint 26 is formed at the end faces of the second connecting portion 233 and the welded joint 214 through butt welding, so a length of contact between the second connecting portion 233 and the welded joint 214 in the axial direction of the electrode assembly 22 can be reduced by butt welding, thereby avoiding occupying internal space within the battery housing.

FIG. 15 is a partially enlarged view of the position B in FIG. 5 according to another embodiment. In some embodiments, referring to FIG. 6 and FIG. 15, a groove 2421 is provided on a side of the lap portion 243 facing the current collecting member 23, the groove 2421 being provided corresponding to the first fusion joint 26.

In one example, the first fusion joint 26 formed by butt welding the end face of the second connecting portion 233 with the open end face of the welded joint 214 is a butt weld seam. For example, as shown in FIG. 15, the butt weld seam reduces the flatness of the open end face 212, and may even protrude from the surface on which the open end face 212 is located. The provision of the groove 2421 that is provided corresponding to the first fusion joint allows the end cover 24 to avoid the first fusion joint 26 during assembly, improving the assembly accuracy.

In some embodiments, an inner diameter D2 of the main body portion 213 is less than an inner diameter D1 of the welded joint 214.

The inner diameter of the main body portion 213 is less than the inner diameter D1 of the welded joint 214, so that the inner surface of the housing forms a larger expanding space at an end close to the opening, thereby providing a larger assembly space for the mounting, positioning, and connection by welding of the current collecting member 23 and making the assembly easier.

In some embodiments, as shown in FIG. 13 and FIG. 14, a step surface is formed at a joint between the main body portion 213 and the welded joint 214, and the current collecting member 23 abuts against the step surface.

The inner diameters of the main body portion 213 and the welded joint 214 may suddenly change at the joint to form a right-angled or approximately right-angled step surface, or may gradually change, such as a chamfer or fillet transition connection, and the portion of the transition connection may also form a step surface with gradually changing dimensions.

The inner diameter of the main body portion 213 is different from that of the welded joint 214, so that a step surface is formed at a joint between an inner side surface of the main body portion 213 and an inner side surface of the welded joint 214, and the current collecting member 23 can be positioned through this step surface, allowing for more convenient contact positioning and improving the assembly efficiency.

In some embodiments, as shown in FIG. 13, a wall thickness of the main body portion 213 is equal to a wall thickness of the welded joint 214.

When the wall thickness of the main body portion 213 is equal to that of the welded joint 214, the inner diameter D1 of the welded joint 214 being larger than the inner diameter D2 of the main body portion 213 means that the welded joint 214 entirely expands outward relative to the main body portion 213, that is, the outer diameter of the welded joint 214 is also larger than that of the main body portion 213. This enables the formation of a step portion for better positioning of the current collecting member 23 while maintaining the strength of the housing 21.

In some embodiments, as shown in FIG. 14, an outer side surface of the main body portion 213 is coplanar with that of the welded joint 214.

The outer side surface of the main body portion 213 being coplanar with that of the welded joint 214 means that the outer side surfaces of the main body portion 213 and the welded joint 214 are flat surfaces, and their outer diameters are equal. However, when the inner diameter D2 of the main body portion 213 is less than the inner diameter D1 of the welded joint 214, it means that the thickness of the welded joint 214 is smaller than that of the main body portion 213, and the inner part of the welded joint 214 is cut away, thereby forming a step surface between the inner surfaces of the welded joint 214 and the main body portion 213.

The outer side surface of the main body portion 213 being coplanar with that of the welded joint 214 can maintain the consistency in dimensions of outer surfaces of battery cells and facilitate the combined assembly of a plurality of battery cells.

In some embodiments, the inner diameter D1 of the welded joint 214 and the inner diameter D2 of the main body portion 213 satisfy D1 - D2 ≥ 0.1 mm.

The inventors of this application have found through extensive experimental analysis that the values of D1 and D2 can also satisfy D1 - D2 ≥ 0.2mm, so that the step surface formed between the welded joint and the main body portion has a certain width to place the current collecting member 23, thereby providing better positioning for mounting of the current collecting member 23, improving mounting accuracy of the current collecting member 23, and improving assembly efficiency.

In some embodiments, as shown in FIG. 14, the current collecting member 23 includes a first material layer 234 and a first welding flux layer 235, where the first material layer 234 is made of a material different from that of the first welding flux layer 235, and the first welding flux layer 235 is located on a side surface of the first material layer 234 facing the housing 21.

Different materials have different melting points, laser absorption rates, and thermal expansion coefficients. When the current collecting member 23 is laser welded to the housing 21, effective welding marks may not be formed or cracks may occur due to large material differences. The provision of the welding flux layer on a surface for welding can assist in welding to improve welding quality.

In some embodiments, as shown in FIG. 14, the housing 21 includes a second material layer 215 and a second welding flux layer 216, where the second material layer 215 is made of a material different from that of the second welding flux layer 216, and the second welding flux layer 216 is located on a side surface of the second material layer 215 facing the current collecting member 23.

The welding flux layer may be provided on a side surface of the second material layer 215 of the housing 21 facing the current collecting member 23, or on a side surface of the first material layer 234 of the current collecting member 23 facing the housing 21, or on two surfaces opposite the housing 21 and the current collecting member 23. This can further improve the shaping quality of the welding mark.

In some embodiments, the first material layer 234 is made of copper, and the second material layer 215 is made of carbon steel.

The selection of copper with high conductivity for the first material layer 234 of the current collecting member 23 can better achieve current collection and reduce the internal resistance of the battery. The selection of carbon steel for the second material layer 215 of the housing 21 can balance both structural strength and conductivity.

In some embodiments, the first welding flux layer 235 and the second welding flux layer 216 are both made of nickel.

The welding flux layer can form a plating, such as a nickel plating, by electroplating on the surfaces of the current collecting member 23 and the housing 21. It can be understood that the current collecting member 23 and the housing 21 may be plated with a welding flux layer on the entire surface, or depending on a specific position of the connection by welding, the welding flux layer may be plated on surface of a region on which the welding position is located to facilitate welding.

In some embodiments, as shown in FIG. 14, thickness of the first welding flux layer 235 is denoted as ul, and thickness of the second welding flux layer 216 is denoted as u2, where 1 µm ≤ ul + u2 ≤ 9 µm.

In some examples, u1 and u2 may also satisfy 2 µm ≤ ul + u2 ≤ 8 µm. In this embodiment, a reasonably set thickness of the welding flux layer allows to control weights of the end cover and the housing while assisting in welding, avoiding unnecessary weight loss.

In some embodiments, as shown in FIG. 5, the electrode assembly 22 further includes a second tab 221B with a polarity different from that of the first tab 221A. The battery cell further includes an electrode terminal 27, the electrode terminal 27 being located at an end of the housing 21 away from the opening and electrically connected to the second tab 221B.

The first tab 221A and the second tab 221B are located on different sides of the electrode assembly 22, respectively. The first tab 221A is in conductive connection with the housing 21 through the current collecting member 23, and the second tab 221B is electrically connected to the electrode terminal 27. The electrode terminal 27 extends out of the housing 21 and is insulated from the housing 21.

An embodiment of a second aspect of this application provides a battery 100 including the battery cell 20 in the foregoing embodiments.

An embodiment of a third aspect of this application provides an electric apparatus, where the electric apparatus includes the battery 100 in the foregoing embodiments, and the battery 100 is configured to supply electric energy.

The following describes a structure of the battery cell 20 of this application through two specific embodiments by taking the cylindrical battery cell 20 as an example.

FIG. 3 to FIG. 6 show a battery cell 20. The battery cell 20 includes a housing 21, an electrode assembly 22, a current collecting member 23, and an end cover 24. The housing 21 has an opening and an open end face 212 surrounding the opening. The housing 21 has an end wall 211 facing the opening, and an electrode terminal 27 is mounted on the end wall 211. The electrode assembly 22 is arranged in the housing 21. The electrode assembly 22 has a cylindrical shape. The electrode assembly 22 includes a first tab 221A and a second tab 221B. The first tab 221A and the second tab 221B are located on different sides of the electrode assembly 22. The first tab 221A is electrically connected to the current collecting member 23, and the second tab 221B is electrically connected to the electrode terminal 27.

The housing 21 includes a main body portion 213 and a welded joint 214, the main body portion 213 surrounds the periphery of the electrode assembly 22, the welded joint 214 is located at a section of the main body portion 213 close to the opening, and an end face of the welded joint 214 away from the electrode assembly 22 is the open end face 212 that defines the opening of the housing 21.

The current collecting member 23 is arranged in the housing 21. The current collecting member 23 includes a first connecting portion 232 and a second connecting portion 233. The second connecting portion 233 is connected to an outer edge of the first connecting portion 232 and has an annular structure. The first connecting portion 232 is provided with a plurality of stiffeners 231. The stiffeners 231 are punching grooves protruding from the surface of the first connecting portion 232 facing the electrode assembly 22, the bottom wall of each punching groove is welded to the first tab 221A to form a second fusion joint 25, and the second connecting portion 233 is welded to an inner side surface of the welded joint 214 of the housing 21 to form a first fusion joint 26. Three, four, or six second fusion joints 25 are formed, and a plurality of second fusion joints 25 are evenly distributed around the central axis of the electrode assembly 22. Similarly, a plurality of second fusion joints 26 are formed. The plurality of second fusion joints 26 are evenly distributed around the central axis of the electrode assembly 22. A sum of lengths of all the first fusion joints 26 in a circumferential direction of the housing 21 is a first length L1, and the first length L1 and a second length L2 satisfy L1 ≥ 0.5 × L2. Thickness of the second connecting portion 233 in a direction perpendicular to the central axis of the electrode assembly 22 is denoted as t1, and height of the second connecting portion 233 in an axial direction of the electrode assembly 22 is denoted as h0, where t1 and h0 satisfy 2 ≤ h0/t1 ≤ 6.

A smooth transition may be formed at a joint between the first connecting portion 232 and the second connecting portion 233, so that the joint is formed into a chamfered corner. An outer diameter of the annular second connecting portion 233 is larger than an inner diameter of the housing 21, so that the second connecting portion 233 is in interference fit with a cavity of the housing 21. The second connecting portion 233 includes protruding portions 2331 and notches 2332 located between adjacent protruding portions 2331, and height h1 of the notch 2332 in the axial direction X of the electrode assembly 22 is less than or equal to height h0 of the protruding portion 2331.

The end cover 24 may be provided with a pressure relief mechanism, such as an indentation groove. The end cover 24 may include an end cover body 241 and an abutting portion 242 and a lap portion 243 surrounding the end cover body 241. The abutting portion 242 abuts against a surface of the first connecting portion 232 facing away from the electrode assembly 22. A side surface of the end cover body 241 facing away from the electrode assembly 22 is coplanar with a side surface of the lap portion 243 facing away from the housing 21. The lap portion 243 is connected to the open end face 212. In the axial direction X of the electrode assembly 22, thickness C1 of the lap portion 243 is smaller than thickness C2 of the end cover body 241. A side of the lap portion 243 facing the housing 21 is provided with a groove 2421 that is provided corresponding to the first fusion joint 26.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery cell, comprising:
an electrode assembly, comprising a first tab;
a housing configured to accommodate the electrode assembly; and
a current collecting member accommodated in the housing, wherein the current collecting member is electrically connected to the first tab, and the current collecting member is connected to the housing by welding.

2. The battery cell according to claim 1, wherein the current collecting member comprises:
a first connecting portion configured to be electrically connected to the first tab; and
a second connecting portion connected to the first connecting portion, wherein the second connecting portion is arranged along an edge of the first connecting portion and protrudes along a direction leaving the electrode assembly, and the second connecting portion is connected to the housing by welding to form a first fusion joint.

3. The battery cell according to claim 2, wherein thickness of the second connecting portion in a direction perpendicular to a central axis of the electrode assembly is denoted as t1, and height of the second connecting portion in an axial direction of the electrode assembly is denoted as h0, satisfying 2 ≤ h0/t1 ≤ 6.

4. The battery cell according to claim 2 or 3, wherein thickness of the second connecting portion in a direction perpendicular to the axial direction of the electrode assembly is denoted as t1, and 0.1 mm ≤ t1 ≤ 0.5 mm.

5. The battery cell according to any one of claims 2 to 4, wherein an outer side surface of the second connecting portion is in interference fit with an inner side surface of the housing.

6. The battery cell according to claim 5, wherein the second connecting portion comprises a plurality of protruding portions spaced apart along a circumferential direction of an inner wall of the housing and notches located between two adjacent protruding portions; and the plurality of protruding portions are welded to the housing to form a plurality of first fusion joints.

7. The battery cell according to claim 6, wherein the plurality of protruding portions are evenly spaced apart around an axis of the electrode assembly.

8. The battery cell according to claim 6 or 7, wherein in an axial direction of the electrode assembly, height of the protruding portion of the second connecting portion is denoted as h0, and height of the notch in the axial direction of the electrode assembly is denoted as h1, wherein h1≤ h0.

9. The battery cell according to any one of claims 2 to 8, wherein a length of a projection of the first fusion joint along an axial direction of the electrode assembly is a first length L1, and a perimeter of a projection of an inner side surface of the housing along the axial direction of the electrode assembly is a second length L2, wherein the first length L1 and the second length L2 satisfy L1 ≥ 0.5 × L2.

10. The battery cell according to any one of claims 2 to 9, wherein the first connecting portion is connected to the first tab by welding to form a second fusion joint.

11. The battery cell according to claim 10, wherein the first connecting portion comprises a first side surface facing the electrode assembly and a second side surface away from the electrode assembly, and at least one of the first side surface and the second side surface is provided with a stiffener, the stiffener being configured to reinforce the first connecting portion.

12. The battery cell according to claim 11, wherein at least one stiffener located on the first side surface and the first tab are correspondingly provided and connected by welding to form the second fusion joint.

13. The battery cell according to claim 12, wherein the stiffener used to form the second fusion joint is a punching groove protruding along a direction approaching the electrode assembly, and a side of the punching groove facing away from the electrode assembly is recessed in the second side surface.

14. The battery cell according to claim 13, wherein the punching groove is provided in a quantity of greater than or equal to three.

15. The battery cell according to claim 14, wherein a plurality of punching grooves are evenly spaced apart along a circumferential direction of the center of the first connecting portion.

16. The battery cell according to any one of claims 13 to 15, wherein the punching grooves are a plurality of radially extending spoke-shaped patterns or a plurality of crescent-shaped patterns.

17. The battery cell according to any one of claims 2 to 16, wherein a chamfer or fillet is formed at a joint between the second connecting portion and the first connecting portion.

18. The battery cell according to any one of claims 2 to 17, wherein thickness of the first connecting portion in an axial direction of the electrode assembly is denoted as t2, and 0.1 mm ≤ t2 ≤ 0.5 mm.

19. The battery cell according to any one of claims 2 to 18, wherein the housing comprises an open end face with an opening, the battery cell further comprises an end cover, the end cover comprises an end cover body and a lap portion around an outer edge of the end cover body, and the lap portion is connected to the open end face to cover the opening.

20. The battery cell according to claim 19, wherein in an axial direction of the electrode assembly, thickness C1 of the lap portion and thickness C2 of the end cover body satisfy C1 ≤ C2.

21. The battery cell according to claim 20, wherein the thickness C1 of the lap portion satisfies 0.2 mm ≤ C1 ≤ 0.5 mm, and the thickness C2 of the end cover body satisfies 0.3 mm ≤ C2 ≤ 0.7 mm.

22. The battery cell according to any one of claims 19 to 21, wherein the housing comprises a main body portion and a welded joint that are connected, wherein the main body portion surrounds an outer side of the electrode assembly, the welded joint is located at an end of the main body portion close to the opening, the open end face is located at an end of the welded joint away from the electrode assembly, and the second connecting portion is connected to the welded joint by welding to form the first fusion joint.

23. The battery cell according to claim 22, wherein an end face of the second connecting portion away from the first connecting portion is flush with the open end face.

24. The battery cell according to claim 22, wherein an end face of the second connecting portion away from the first connecting portion is lower than the open end face.

25. The battery cell according to any one of claims 22 to 24, wherein the first fusion joint is configured as a penetration weld seam formed by the laser light penetrating the second connecting portion and melting at least part of the welded joint.

26. The battery cell according to any one of claims 22 to 24, wherein the first fusion joint is configured as a butt weld seam formed by the laser light being directed toward a butt j oint between the second connecting portion and the welded joint.

27. The battery cell according to claim 26, wherein a groove is provided on a side of the lap portion facing the current collecting member, the groove being provided corresponding to the first fusion joint.

28. The battery cell according to any one of claims 22 to 26, wherein an inner diameter of the main body portion is less than an inner diameter of the welded joint.

29. The battery cell according to claim 28, wherein a step surface is formed at a joint between the main body portion and the welded joint, and the current collecting member abuts against the step surface.

30. The battery cell according to claim 29, wherein a wall thickness of the main body portion is equal to a wall thickness of the welded joint.

31. The battery cell according to claim 29, wherein an outer side surface of the main body portion is coplanar with an outer side surface of the welded joint.

32. The battery cell according to any one of claims 28 to 31, wherein in a direction perpendicular to an axial direction of the electrode assembly, the inner diameter D1 of the welded joint and the inner diameter D2 of the main body portion satisfy D1 - D2 ≥ 0.1 mm.

33. The battery cell according to any one of claims 1 to 32, wherein the current collecting member comprises a first material layer and a first welding flux layer, wherein the first material layer is made of a material different from that of the first welding flux layer, and the first welding flux layer is located on a side surface of the first material layer facing the housing.

34. The battery cell according to claim 33, wherein the housing comprises a second material layer and a second welding flux layer, wherein the second material layer is made of a material different from that of the second welding flux layer, and the second welding flux layer is located on a side surface of the second material layer facing the current collecting member.

35. The battery cell according to claim 34, wherein the first material layer is made of copper, and the second material layer is made of carbon steel.

36. The battery cell according to claim 34 or 35, wherein the first welding flux layer and the second welding flux layer are both made of nickel.

37. The battery cell according to any one of claims 34 to 36, wherein thickness of the first welding flux layer is denoted as u1, and thickness of the second welding flux layer is denoted as u2, wherein 1 µm ≤ ul + u2 ≤ 9 µm.

38. The battery cell according to any one of claims 1 to 37, wherein the electrode assembly further comprises a second tab with a polarity different from that of the first tab; and
the battery cell further comprises an electrode terminal, the electrode terminal being located at an end of the housing away from the opening and electrically connected to the second tab.

39. A battery, comprising the battery cell according to any one of claims 1 to 38.

40. An electric apparatus, wherein the electric apparatus comprises the battery according to claim 39, and the battery is configured to supply electric energy.
